# EUROPÄISCHE PATENTSCHRIFT

(11) **EP 2 219 915 B1**
(45) Veröffentlichungstag und Bekanntmachung des Hinweises auf die Patenterteilung: **07.01.2015**
(21) Anmeldenummer: 08856815.9
(22) Anmeldetag: 21.11.2008
(51) Int. Cl.: B60T 8/88

(54) **SCHALTUNGSANORDNUNG ZUR ÜBERWACHUNG VON DURCH ELEKTRISCHE IMPULSE ANGESTEUERTEN GERÄTEN**
CIRCUIT ARRANGEMENT FOR MONITORING DEVICES ACTIVATED BY ELECTRICAL PULSES
CIRCUIT DE CONTRÔLE D'APPAREILS COMMANDÉS PAR IMPULSIONS ÉLECTRIQUES

(30) Priorität: 03.12.2007 DE 102007057990
(43) Veröffentlichungstag der Anmeldung: 25.08.2010
(73) Patentinhaber: KNORR-BREMSE Systeme für Nutzfahrzeuge GmbH, 80809 München (DE)
(72) Erfinder: DAGTEKIN, Nusret, 71665 Vaihingen (DE)
(74) Vertreter: Schönmann, Kurt
(86) Internationale Anmeldenummer: PCT/EP2008/009847
(87) Internationale Veröffentlichungsnummer: WO 2009/071184

(56) Entgegenhaltungen:
- DE-A1- 3 925 418
- DE-A1- 10 124 109
- GB-A- 2 265 228

## Beschreibung

Die Erfindung bezieht sich auf ein Verfahren und eine Schaltungsanordnung zur Überwachung von durch elektrische Impulse angesteuerten Geräten.

In der Kraftfahrzeugtechnik werden viele Geräte, insbesondere Ventile, wie Bremssteuerventile, Blockierschutzventile, Anhängerbremsventile und ähnliches durch elektrische Impulse und insbesondere pulsweitenmodulierte Signale (im folgenden PWM-Signale) angesteuert. Die hierzu verwendeten Steuergeräte enthalten meist einen programmgesteuerten Mikroprozessor, der über eine Endstufe (Treiberschaltung) die entsprechenden Ventile ansteuert.

Bei sicherheitskritischen Anwendungen, wie bei Bremsventilen von Kraftfahrzeugen, ist es notwendig, auftretende Fehler, wie Ausfall der Treiberschaltung, Leitungsunterbrechungen, Kurzschlüsse, Massefehler und ähnliches schnellstmöglich zu erkennen. Zu diesem Zwecke sind aufwendige Überprüfungsschaltungen bekannt, die mögliche Fehler überwachen und melden.

So beschreibt die DE 42 15 075 C2 ein Verfahren zur Ansteuerung eines elektrischen Bauelementes mit mindestens einem Mikrocomputer mit zwei Steuereingängen. Auf einer ersten Steuerleitung werden Signale unidirektional übertragen und auf der zweiten Steuerleitung bidirektional. Die zweite Steuerleitung wird dabei auch als Fehlerrückmeldeleitung verwendet und der bidirektionale Anschluß ist in der Lage, zwei unterschiedliche LOW-Pegel zu unterscheiden, wobei mit einem Komparator entsprechende Pegel verglichen und daraus Rückschlüsse auf einen Fehlerzustand gezogen werden.

Weitere Überwachungsschaltungen sind aus der DE 197 58 101 C2, DE 42 02 601 A1 oder DE 29 38 344 A1 bekannt.
Eine Überwachungsschaltung gemäß dem Oberbegriff des Anspruchs 1 ist aus der GB 2 265 228 A bekannt.
Aufgabe der Erfindung ist es, eine Vorrichtung der eingangs genannten Art dahingehend zu verbessern, daß mit geringem schaltungstechnischem Aufwand eine möglichst sichere Überwachung der Ansteuerung eines durch elektrische Impulse angesteuerten Gerätes möglich ist.

Diese Aufgabe wird für die Schaltungsanordnung durch den Patentanspruch 1 gelöst. Vorteilhafte Ausgestaltungen und Weiterbildungen der Erfindung sind den Unteransprüchen zu entnehmen.

Der Grundgedanke der Erfindung liegt darin, die Rückmeldung einer Endstufe mit einem Zähler auszuwerten. Vom Steuergerät werden also erste elektrische Impulse zur Endstufe gesandt, welche ein entsprechendes Gerät, wie z.B. ein Magnetventil, mit diesen Impulsen ansteuert. Üblicherweise werden hier pulsweitenmodulierte Impulse verwendet. Der Ausgang der Endstufe wird abgegriffen und die so abgegriffenen Impulse werden rückgemeldet und ebenfalls gezählt. Durch einen Vergleich der Zahl der ersten Impulse und der Zahl der zweiten Impulse erhält man eine schnelle und sichere Anzeige dafür, ob alle zur Endstufe gesandten Ansteuerimpulse auch an das anzusteuernde Gerät weitergeleitet wurden.

In besonders einfacher Weise kann man einen Aufwärts-/Abwärtszähler verwenden, an dessen Aufwärtszähleingang die einen Impulse und an dessen Abwärtszähleingang die anderen Impulse angelegt werden. Im fehlerfreien Zustand ist der Zählerstand dieses Aufwärts-/Abwärtszählers gleich Null, wobei man ein Toleranzband vorgeben kann, ab welchem Zählerstand ein Fehler gemeldet werden soll.

Vorzugsweise ist vorgesehen, daß der Zähler in periodischen Abständen auf den Zählerstand Null rückgesetzt wird.

Die entsprechende Schaltungsanordnung mit einem Steuergerät und einer Treiberschaltung hat eine Rückmeldeschaltung, die an den Ausgang der Treiberschaltung angeschlossen ist und mit einem Zähleingang eines Zählers verbunden ist. Die Rückmeldeschaltung ist in besonders einfacher Weise in Form eines Spannungsteilers aufgebaut.

Vorzugsweise wird im Steuergerät der Zählerstand des Zählers von einem Mikroprozessor in regelmäßigen Abständen abgefragt und überprüft, ob der Zählerstand einen zu erwartenden Wert besitzt. Dieser Wert ist davon abhängig, wie hoch die Ansteuerfrequenz ist und welche Art von Zähler verwendet wird.

Im folgenden wird die Erfindung anhand von zwei Ausführungsbeispielen im Zusammenhang mit der Zeichnung ausführlicher erläutert.

Es zeigt:
- Fig. 1: Ein Prinzipschaltbild eines ersten Ausführungsbeispieles nach der Erfindung; und
- Fig. 2: ein Prinzipschaltbild eines zweiten Ausführungsbeispieles.

Die Schaltungsanordnung nach der Erfindung hat als Gerät eine anzusteuernde Last 1, die beispielsweise ein Magnetventil einer Bremsanlage ist. Diese Last 1 wird durch PWM-Signale angesteuert. Hierzu ist ein Steuergerät 2 mit einem Mikroprozessor vorgesehen, das entsprechende PWM-Signale über eine Endstufe 3 zur Last 1 liefert. Die Endstufe 3 hat ein RC-Glied mit einem Widerstand R1 und einem Kondensator C2 sowie einen Transistor T1, an dessen Ausgang die Last 1 angeschlossen ist. An diesen Ausgang ist eine Rückmeldeschaltung 4 angeschlossen, die einen Spannungsteiler mit Widerständen R2 und R3 sowie einen Kondensator C1 enthält, wobei ein Ausgang der Rückmeldeschaltung 4 mit einem Zähleingang 5.1 eines Zählers 5 verbunden ist.

Weiter hat hier der Zähler 5 einen zweiten Zähleingang 5.2, der intern im Steuergerät 2 die PWM-Signale erhält, die zur Endstufe 3 geleitet werden. Einer der Zähleingänge 5.1 oder 5.2 bewirkt ein Aufwärtszählen des Zählers, während der andere Zähleingang 5.2 oder 5.1 ein Abwärtszählen bewirkt. Somit werden beispielsweise die am Zähleingang 5.2 ankommenden und damit gleichzeitig zur Endstufe 3 gesandten Impulse aufwärts gezählt und die von der Rückmeldeschaltung kommenden Impulse am Zähleingang 5.1 abwärts gezählt. Kommen alle Impulse, die zur Endstufe 3 gesandt werden, auch über die Rückmeldeschaltung 4 am Zähleingang 5.1 zurück, so ist der Zählerstand des Zählers 5 gleich Null und wird am Zählerausgang 5.3 ausgegeben. Eine Abfrageschaltung 6 ist an diesen Ausgang 5.3 angeschlossen und meldet, wenn der abgefragte Zählerstand einen bestimmten vorgegebenen Wert überschritten hat.

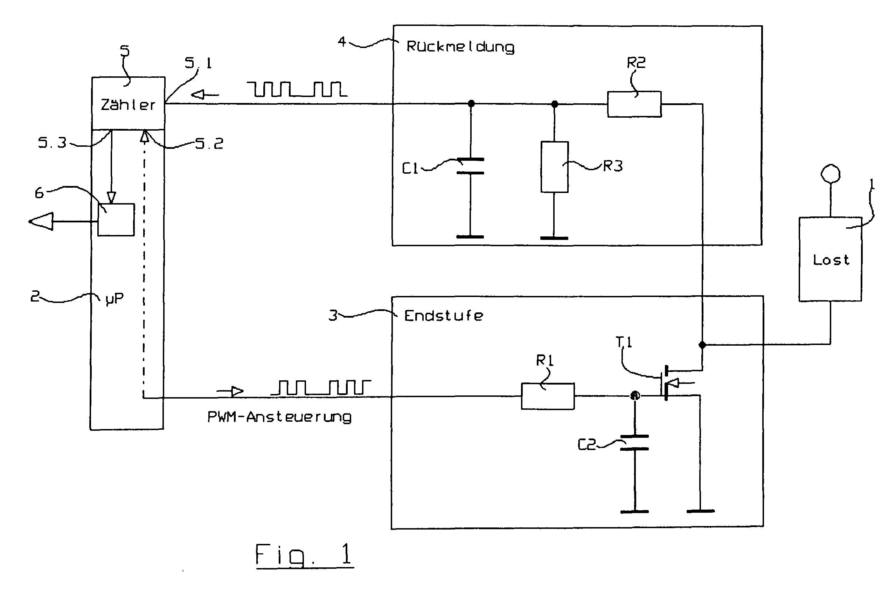

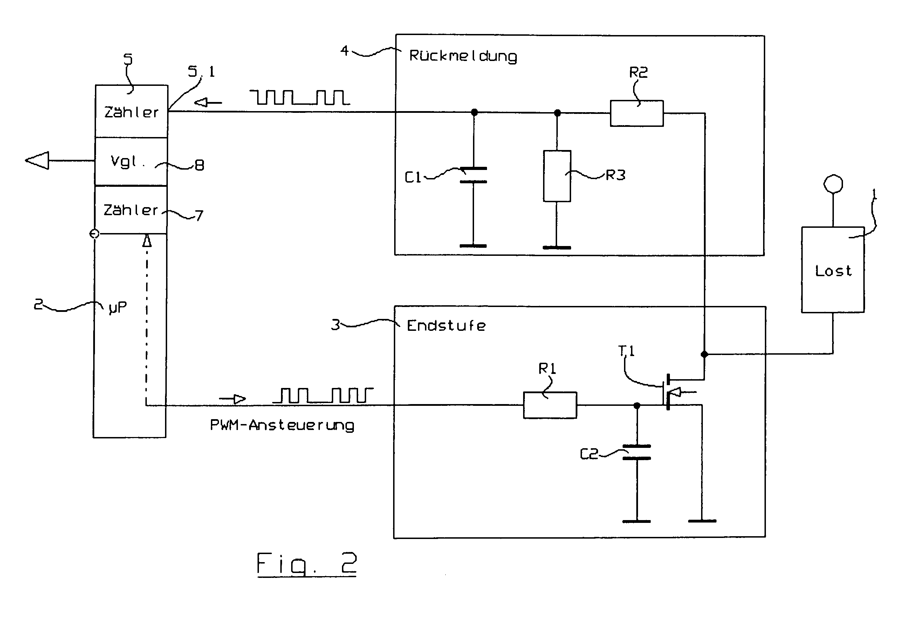

Das Ausführungsbeispiel der Figur 2 unterscheidet sich von dem der Figur 1 lediglich durch die Art der Zähler. Es sind hier zwei Zähler 5 und 7 vorgesehen. Der erste Zähler 5 ist mit seinem Zähleingang 5.2 mit der Rückmeldeschaltung 4 verbunden, während der zweite Zähler 7 intern im Steuergerät 2 mit den zur Endstufe 3 gesandten PWM-Impulsen beaufschlagt wird. Beide Zähler 5 und 7 sind mit einem Vergleicher 8 verbunden, der in regelmäßigen Abständen die Zählinhalte der beiden Zähler 5 und 7 vergleicht. Liegt die Abweichung der Zählerstände der Zähler 5 und 7 oberhalb eines vorgegebenen Grenzwertes, so meldet der Vergleicher 8 ebenfalls einen Fehler.

Bei beiden Ausführungsbeispielen ist es von Vorteil, den Zählerstand der Zähler 5 bzw. 5 und 7 in vorgegebenen zeitlichen Abständen auf Null rückzusetzen.

Bei den in Kraftfahrzeugen üblichen Fehlern, wie z.B. Leitungsunterbrechung, Kurzschluß, Durchlegieren des Leistungstransistor T1 in der Endstufe 3 oder ähnlichem, werden die zur Endstufe 3 gesandten PWM-Impulse nicht mehr am Ausgang der Endstufe 3 erscheinen oder in stark verfälschter Form, so daß Fehler schnell und einfach erkannt werden können. Dabei ist es selbstverständlich zweckmäßig, am Zähleingang 5.1 entsprechende High-and-low-Pegel einzustellen, bei denen ein Zählvorgang ausgelöst wird. Zur Vermeidung von Laufzeitfehlern der Zähler und zur Vermeidung unnötig häufiger Fehlermeldungen aufgrund einzelner Fremdstörimpulse ist bei beiden Ausführungsbeispielen vorgesehen, daß eine Fehlermeldung erst dann ausgegeben wird, wenn der Zählerstand bzw. die Zählerstände außerhalb eines vorgegebenen Toleranzbandes liegen.

## Patentansprüche

1. Schaltungsanordnung zur Überwachung von durch elektrische Impulse angesteuerten Geräten (1),
mit einem Steuergerät (2), das erste Impulse zu einer Endstufe (3) überträgt, an deren Ausgang ein anzusteuerndes Gerät (1) angeschlossen ist,
mit einem Zähler (5), dessen Zähleingang (5.2) die ersten Impulse zugeführt werden und der die Anzahl der zur Endstufe (3) übermittelten ersten Impulse zählt,
mit einer Rückmeldeschaltung (4), die mit einem Zähleingang (5.1) des Zählers (5) verbunden ist und die in Abhängigkeit der von der Endstufe (3) zum Gerät (1) gesandten Impulse zweite Impulse erzeugt, die gezählt werden,
wobei die Anzahl der ersten und zweiten Impulse verglichen wird,
**dadurch gekennzeichnet**
**dass** die Rückmeldeschaltung (4) an den Ausgang der Endstufe (3) angeschlossen ist,
**dass** der Zähler (5) ein Aufwärts-/Abwärtszähler mit einem Aufwärts-Zähleingang (5.1) und einem Abwärts-Zähleingang (5.2) ist, wobei die ersten Impulse einem der Zähleingänge und die zweiten Impulse dem anderen der Zähleingänge des Zählers (5) zugeführt werden und
**dass** eine Abfrageschaltung (6) an den Ausgang des Zählers (5) angeschlossen ist und meldet, wenn der abgefragte Zählerstand einen bestimmten vorgegebenen Wert überschreitet.

2. Schaltungsanordnung nach Anspruch 1 , **dadurch gekennzeichnet, dass** der Zähler (5) in vorgegebenen Zeitabständen auf Null zurückgesetzt wird.

3. Schaltungsanordnung nach Anspruch 1 oder 2, **dadurch gekennzeichnet, dass** der Zähler (5) Bestandteil des Steuergerätes (2) ist.

4. Schaltungsanordnung nach einem der Ansprüche 1 bis 3, **dadurch gekennzeichnet, dass** nur dann eine Fehlermeldung ausgegeben wird, wenn der Zählerstand außerhalb eines vorgegebenen Toleranzbandes liegen.

5. Schaltungsanordnung nach einem der Ansprüche 1 bis 4, **dadurch gekennzeichnet, dass** der Zähleingang (5.1), der mit der Rückmeldeschaltung (4) verbunden ist, auf voreingestellte Pegel anspricht.

## Claims

1. Circuit arrangement for monitoring devices (1) which are activated by electrical pulses, having a control device (2) which transmits first pulses to an output stage (3), to the output of which a device (1) which is to be activated is connected,
having a counter (5) whose counting input (5.2) is supplied with the first pulses and which counts the number of first pulses transmitted to the output stage (3),
having a feedback circuit (4) which is connected to a counting input (5.1) of the counter (5) and which generates second pulses as a function of the pulses transmitted to the device (1) by the output stage (3) and which are counted,
wherein the number of first and second pulses is compared,
**characterized**
**in that** the feedback circuit (4) is connected to the output of the output stage (3),
**in that** the counter (5) is an upward/downward counter having an upward counting input (5.1) and a downward counting input (5.2), wherein the first pulses are fed to one of the counting inputs, and the second pulses are fed to the other counting inputs of the counter (5), and
**in that** an interrogation circuit (6) is connected to the output of the counter (5) and signals when the interrogated counter reading exceeds a specific predefined value.

2. Circuit arrangement according to Claim 1, **characterized in that** the counter (5) is reset to zero in predefined time intervals.

3. Circuit arrangement according to Claim 1 or 2, **characterized in that** the counter is a component of the control device.

4. Circuit arrangement according to one of Claims 1 to 3, **characterized in that** a fault message is output only if the counter reading is outside a predetermined tolerance band.

5. Circuit arrangement according to one of Claims 1 to 4, **characterized in that** the counting input (5.1) which is connected to the feedback circuit (4) responds to preset levels.

## Revendications

1. Ensemble à circuit (1) à surveiller des appareils (1) pilotés par des impulsions électriques,
comprenant un dispositif de commande (2), qui transmet des premières impulsions à un étage de puissance (3), à un appareil (1) à piloter étant raccordé à la sortie dudit étage de puissance,
à un compteur (5), auxdites première impulsions étant alimentées a l'entrée de comptage (5.2) dudit compteur, auquel compteur comptant le nombre des premières impulsions transmises audit étage de puissance (3),
à un circuit d'information de retour (4), qui est relié à une entrée de comptage (5.1) dudit compteur et qui engendre des deuxièmes impulsions, qui sont comptées, en fonction des impulsions transmises à partir dudit étage de puissance (3) vers ledit appareil (1),
a comparaison du nombre desdites premières et deuxièmes impulsions,
**caractérisé en ce**
**que** ledit circuit d'information de retour (4) est raccordé à la sortie dudit étage de puissance (3),
en ce que ledit compteur est un compteur à ordre croissant/décroissant, muni d'une entrée de comptage à ordre croissant (5.1) et d'une entrée de comptage à ordre décroissant (5.2), auxdites premières impulsions étant alimentées à une desdites entrées de comptage et auxdites deuxièmes impulsions étant alimentées à l'autre desdites entrées de comptage dudit compteur (5), et
en ce qu'un circuit interrogateur (6) est raccordé à la sortie dudit compteur (5) et signale quand le comptage interrogé dépasse une valeur prédéterminée spécifiée.

2. Ensemble à circuit selon la revendication 1, **caractérisé en ce que** ledit compteur (5) est remis à zéro aux intervalles prédéterminés.

3. Ensemble à circuit selon la revendication 1 ou 2, **caractérisé en ce que** ledit compteur (5) est un composant dudit dispositif de commande (2).

4. Ensemble à circuit selon une quelconque des revendications 1 à 3, **caractérisé en ce qu'**un message d'erreur n'est délivré que quand le compteur se trouve en dehors d'une bande de tolérance prédéterminée.

5. Ensemble à circuit selon une quelconque des revendications 1 à 4, **caractérisé en ce que** ladite entrée de comptage (5.1), qui est reliée audit circuit d'information de retour (4), répond aux niveaux préréglés.
